(19) Europäisches Patentamt
European Patent Office
Office européen des brevets

(11) **EP 3 102 351 B1**

(12) **EUROPÄISCHE PATENTSCHRIFT**

(45) Veröffentlichungstag und Bekanntmachung des Hinweises auf die Patenterteilung:
**24.05.2017 Patentblatt 2017/21**

(21) Anmeldenummer: **14814796.0**

(22) Anmeldetag: **09.12.2014**

(51) Int Cl.:
**B22D 11/22** (2006.01)     **B22D 46/00** (2006.01)
**C21D 11/00** (2006.01)

(86) Internationale Anmeldenummer:
**PCT/EP2014/076957**

(87) Internationale Veröffentlichungsnummer:
**WO 2015/117697 (13.08.2015 Gazette 2015/32)**

(54) **ÜBERWACHUNG EINES LEITUNGSSYSTEMS**

MONITORING OF A COOLING CHANNEL SYSTEM

SURVEILLANCE D'UN SYSTÈME DE CONDUITES DE REFROIDISSEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.02.2014 EP 14154234**

(43) Veröffentlichungstag der Anmeldung:
**14.12.2016 Patentblatt 2016/50**

(73) Patentinhaber: **Primetals Technologies Austria GmbH**
**4031 Linz (AT)**

(72) Erfinder:
• **DITTENBERGER, Kurt**
**A-4060 Leonding (AT)**
• **LANZERSTORFER, Daniel**
**A-4175 Herzogsdorf (AT)**
• **HAUSER, Klemens**
**A-4055 Pucking (AT)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
AT-B1- 513 042          DE-A1- 4 417 808
DE-A1-102009 051 931    JP-A- H01 149 909

**Beschreibung**

Die Erfindung betrifft ein Verfahren und eine Vorrichtung zur Überwachung eines ein flüssiges Medium führenden Leitungssystems mit zumindest einer Leitung, bei dem durch Ermittlung von Druck des flüssigen Mediums und Fluss des flüssigen Mediums in der zumindest einen Leitung ein Verstopfungsgrad für die zumindest eine Leitung berechnet wird, welcher als Hinweis für das Vorliegen einer Störung des Leitungssystems herangezogen wird.

An Leitungssysteme, welche flüssige Medien führen, werden hohe Anforderungen in Bezug auf Zuverlässigkeit gestellt, da diese oftmals zentrale Bestandteile von sicherheitsrelevanten Vorrichtungen darstellen. In derartigen Fällen müssen als Bestandteil von Kühleinrichtungen ausgeführte Leitungssysteme laufend auf ihre Funktionstüchtigkeit überprüft werden, da im Falle eines Versagens des Leitungssystems, beispielsweise durch Leckagen oder Verstopfungen, hohe Schäden verursacht werden können.

Führt das Leitungssystem beispielsweise flüssige Medien wie Wasser, so besteht eine bekannte Methode zur Überwachung eines derartigen Leitungssystems darin, laufend den aktuellen Fluss des flüssigen Mediums im Leitungssystem als Parameter zu erfassen. Mittels einer sogenannten Wasserdruckfunktion wird aus den erfassten Parametern ein sogenannter theoretischer Druck des flüssigen Mediums ermittelt. Der theoretische Druck des flüssigen Mediums ist derjenige Druck, der sich durch Einsetzen des aktuellen Flusses des flüssigen Mediums aus der Wasserdruckfunktion ergibt. Nach Messung des aktuellen Druckes des flüssigen Mediums im Leitungssystem wird die Differenz zwischen dem aktuellen Druck des flüssigen Mediums und dem theoretischen Druck des flüssigen Mediums ermittelt. Die sich ergebenden Differenzen dienen beispielsweise als Maß für die Verstopfung beziehungsweise als Maß für die Größe der Leckage des Leitungssystems und werden laufend gegen eine vorgegebene Toleranz verglichen. Wird die Toleranz über einen längeren Zeitraum überschritten, so wird ein Alarm als Hinweis auf eine Störung des Leitungssystems ausgelöst.

Nachteilig dabei ist, dass die erfassten Parameter im Allgemeinen mit einem starken Rauschen beaufschlagt sind, wodurch unnötige Fehlalarme ausgelöst werden. Um dies zu vermeiden, werden relativ große Toleranzen vorgegeben, wobei dies wiederum die Zuverlässigkeit der Überwachung negativ beeinflusst. Ein weiterer Nachteil besteht darin, dass die ermittelte Differenz zwischen dem aktuellen Druck des flüssigen Mediums und dem theoretischen Druck des flüssigen Mediums nur eine tendenzielle Auskunft über das Maß der Verstopfung gibt. Generell ist es daher schwierig, vernünftige Werte für die Toleranzen vorzugeben, bei denen sowohl wenige Fehlalarme ausgelöst werden als auch ein gewisses Maß an Zuverlässigkeit der Überwachung gegeben ist.

Aus der DE 10 2009 051 931 A1 ist ein Verfahren zur Früherkennung von Leckagen in einer Kühlvorrichtung zum Kühlen einer technischen Anlage bekannt. Bei diesem Verfahren sind in einer Leitung in einem gewissen Abstand hintereinander zwei steuerbare Ventile angeordnet. Zwischen den beiden Ventilen sind zwei Drucksensoren angeordnet. Je einer der beiden Drucksensoren ist in der Nähe je eines der beiden Ventile angeordnet. Die tatsächlichen Drücke werden erfasst und mit erwarteten Drücken verglichen. Anhand des Vergleichs wird auf das Vorhandensein einer Leckage geschlossen.

Aus der AT 513 042 B1 ist bekannt, in einem Leitungssystem wiederholt eine Druckdifferenz und einen tatsächlichen Fluss zu erfassen und daraus den hydraulischen Widerstand des Leitungssystems zu ermitteln. Der ermittelte hydraulische Widerstand wird visuell ausgegeben. Weiterhin kann automatisiert überprüft werden, ob der ermittelte hydraulische Widerstand innerhalb eines zulässigen Bereichs liegt. Bei Verlassen des zulässigen Bereichs kann eine Warnmeldung ausgegeben werden.

Aus der JP H01 149-109 A ist bekannt, einen Abschnitt eines Leitungssystems ausgangsseitig mittels eines Ventils abzusperren, sodann mit Druck zu beaufschlagen und schließlich auch eingangsseitig mittels eines weiteren Ventils abzusperren. Der Druck in dem Abschnitt des Leitungssystems wird sodann erfasst und ausgewertet.

Aus der AT 513 042 B1 ist bekannt, zu einem bestimmten Zeitpunkt einen Druckabfall und einen Durchfluss zu bestimmen und daraus den hydraulischen Widerstand zu berechnen. Aufgrund dieser Größe wird dann beurteilt, ob Ablagerungen oder Leckagen vorliegen. Der hydraulische Widerstand kann auf einem Bildschirm dargestellt werden. Es kann ein erlaubter Bereich für den hydraulischen Widerstand festgelegt werden. Bei Verlassen des erlaubten Bereiches wird eine Warnmeldung ausgegeben. In der AT 513 042 B1 ist weiterhin eine Formel zur Berechnung des hydraulischen Widerstandes angegeben, welche als Flussfunktion angesehen werden kann.

Die Aufgabe der vorliegenden Erfindung besteht darin, Möglichkeiten zur zuverlässigen Überwachung eines Leitungssystems bereitzustellen, welche die genannten Nachteile überwinden.

Die Aufgabe wird durch ein Verfahren mit den Merkmalen des Anspruchs 1 gelöst. Vorteilhafte Ausgestaltungen des Verfahrens sind Gegenstand der abhängigen Ansprüche 2 bis 8.

Erfindungsgemäß ist im Rahmen des erfindungsgemäßen Verfahrens vorgesehen,

a) dass zu Erfassungszeitpunkten jeweils der aktuelle Druck des flüssigen Mediums in der zumindest einen Leitung und der jeweils zugehörige aktuelle Fluss in der zumindest einen Leitung erfasst werden,
b) dass der jeweils erfasste aktuelle Druck und der jeweils erfasste aktuelle Fluss von einer Recheneinheit entgegengenommen werden,

c) dass von der Recheneinheit aus dem jeweiligen erfassten aktuellen Druck unter Berücksichtigung einer vorgegebenen Flussfunktion, welche einen physikalischen Zusammenhang zwischen dem theoretischen Fluss des flüssigen Mediums und dem jeweiligen aktuellen Druck des flüssigen Mediums beschreibt, ein jeweiliger theoretischer Fluss des flüssigen Mediums in der zumindest einen Leitung berechnet wird,

d) dass von der Recheneinheit anhand des jeweiligen aktuellen und des jeweiligen theoretischen Flusses ein jeweiliger Einzelverstopfungsgrad ermittelt wird,

e) dass von der Recheneinheit anhand einer Anzahl von ermittelten Einzelverstopfungsgraden unter Anwendung stochastischer Methoden ein Intervall berechnet wird, innerhalb dessen ein Verstopfungsgrad des Leitungssystems mit einer festzulegenden Wahrscheinlichkeit liegt, und

f) dass das Leitungssystem durch Heranziehen der Größe des berechneten Intervalls und/oder der Lage des berechneten Intervalls in Bezug auf vorher festgelegte erste Grenzen für den Verstopfungsgrad als Hinweis für das Vorliegen einer Störung des Leitungssystems überwacht wird.

In der zumindest einen Leitung des Leitungssystems befindet sich das flüssige Medium. Es werden zu Erfassungszeitpunkten jeweils der aktuelle beziehungsweise der tatsächliche Druck des flüssigen Mediums und der jeweils zugehörige aktuelle beziehungsweise der tatsächliche Fluss des flüssigen Mediums in der zumindest einen Leitung des Leitungssystems erfasst. Die ermittelten Größen werden an eine Recheneinheit übergeben und von der Recheneinheit entgegengenommen. In der Recheneinheit erfolgt anhand des jeweiligen erfassten aktuellen Druckes eine Berechnung eines theoretischen Flusses des flüssigen Mediums in der zumindest einen Leitung unter Berücksichtigung einer sogenannten Flussfunktion, welche einen physikalischen Zusammenhang zwischen dem theoretischen Fluss des flüssigen Mediums und dem aktuellen Druck des flüssigen Mediums beschreibt.

Die theoretische Flussfunktion wird, unter der Voraussetzung, dass das Leitungssystem störungsfrei ist - also keine Leckagen und/oder Verstopfungen aufweist -, beispielsweise folgendermaßen ermittelt:

Zu jedem aktuellen Druck des flüssigen Mediums wird der aktuelle Fluss des flüssigen Mediums im Leitungssystem beziehungsweise in der zumindest einen Leitung ermittelt. Die dabei generierten Wertetupel beschreiben empirisch den Zusammenhang zwischen dem aktuellen Druck des flüssigen Mediums und dem aktuellen Fluss des flüssigen Mediums im Leitungssystem. Der generierte Zusammenhang wird mittels einer geeigneten Funktion - der Flussfunktion - gefittet. Die Flussfunktion wird in der Recheneinheit hinterlegt.

Die theoretischen Grundlagen und die Herleitung der Flussfunktion sind wie folgt:

Die Druckdifferenz $\Delta pw$ des flüssigen Mediums im Leitungssystem beziehungsweise in der zumindest einen Leitung beträgt entsprechend dem Gesetz von Pascal:

$$\Delta pw = \rho \, g \, \Delta h$$

mit $\rho$ als Dichte des flüssigen Mediums, g als Erdbeschleunigung und $\Delta h$ als Höhendifferenz zwischen einer Druckmessvorrichtung zur Messung des Druckes des flüssigen Mediums und der Position des Leitungssystems beziehungsweise der zumindest einen Leitung.

Der reibungsbedingte Druckverlust $\Delta pf$ im Leitungssystem beziehungsweise in der zumindest einen Leitung ist durch die Darcy-Weisbach Gleichung

$$\Delta pf = \frac{\rho v^2}{2} \frac{l}{d} \lambda$$

mit $\rho$ als Dichte des flüssigen Mediums, $v$ als charakteristische Geschwindigkeit des flüssigen Mediums, $l$ und $d$ als Länge beziehungsweise Durchmesser der zumindest einen Leitung und $\lambda$ als Darcy-Reibungsfaktor gegeben. Der Druckverlust, welcher gegebenenfalls aus von in der Leitung vorhandenen Einbauten resultiert, wird vernachlässigt.

Der Darcy-Reibungsfaktor $\lambda$ ist abhängig von der charakteristischen Geschwindigkeit und von der Rauheit der zumindest einen Leitung. Für laminare Strömungen (Reynoldszahl Re < 2050) gilt:

$$\lambda = \frac{64}{\text{Re}} \quad mit \quad \text{Re} = \frac{\rho\, v\, d}{\eta}$$

mit $\eta$ als dynamische Viskosität des flüssigen Mediums.

Für turbulente Strömungen (Reynoldszahl Re > 4000) gilt die Colebrook-Gleichung, aus der der Darcy-Reibungsfaktor numerisch bestimmt wird:

$$\frac{1}{\sqrt{\lambda}} = 2\log_{10}\left(\frac{2.51}{\text{Re}\sqrt{\lambda}} + \frac{k}{3.7d}\right)$$

mit k als Rauheit der zumindest einen Leitung. Die Rauheit der zumindest einen Leitung beträgt in der Praxis näherungsweise 0, 05 mm.

Für Re > 2010 und Re < 4000 gilt die Formel von Blasius:

$$\lambda = 0.3164/\text{Re}^{0.25}$$

Um die Flussfunktion zu erhalten, wird eine Funktion an die generierten Wertetupel gefittet. Die Flussfunktion kann beispielsweise als

$$w_p = c_1 f^{c_2} + c$$

mit $w_p$ als Druck des flüssigen Mediums, f dem Fluss des flüssigen Mediums und mit $c$, $c_1$ und $c_2$ als Koeffizienten geschrieben werden.

In einem ersten Schritt werden, beispielsweise in einer Testanordnung, in welcher die physikalischen Verhältnisse des tatsächlichen Leitungssystems beziehungsweise der zumindest einen Leitung wiedergegeben werden, die ermittelten Werte für den aktuellen Fluss und den aktuellen Druck des flüssigen Mediums im Leitungssystem mittels der Funktion

$$w_p = c_1 f^{c_2}$$

gefittet. Die Koeffizienten $c_1$ und $c_2 \approx 2$ sind Konstanten. In einem weiteren Schritt werden die im tatsächlichen Leitungssystem ermittelten Daten für den aktuellen Fluss und den aktuellen Druck des flüssigen Mediums mittels der Funktion

$$w_p = p_1 + (p_2 + c_1) f^{c_2} + p_3 f^{1.7}$$

gefittet, wobei $p_1$ die Druckdifferenz bezüglich Austrittsposition des flüssigen Mediums aus der zumindest einen Leitung und Druckmessung und $p_2$ sowie $p_3$ den Druckverlust des flüssigen Mediums im Leitungssystem beziehungsweise in der zumindest einen Leitung auf Grund der Reibung zwischen dem flüssigen Medium und dem Leitungssystem beziehungsweise der zumindest einen Leitung beschreiben.

Entsprechend der Gleichung von Bernoulli ist weiterhin der Zusammenhang zwischen dem Druck $w_p$ des flüssigen Mediums und dem Fluss f des flüssigen Mediums durch

$$w_p = c_1 f^2 + c$$

gegeben. Zu beachten ist jedoch, dass die oben genannten Relationen nur für Einphasenströmungen gültig sind.

Nach Generierung der Flussfunktion lässt sich aus dem ermittelten aktuellen Druck $w_p$ des flüssigen Mediums der theoretische Fluss f des flüssigen Mediums im Leitungssystem beziehungsweise in der zumindest einen Leitung berechnen.

Mittels der Recheneinheit wird anschließend ein Intervall für einen Verstopfungsgrad $\kappa$ berechnet, innerhalb dessen der Verstopfungsgrad $\kappa$ mit einer festzulegenden Wahrscheinlichkeit liegt.

Aus dem Quotienten zwischen dem aktuellen (gemessenen) Fluss $f_{act}$ und dem theoretischen Fluss $f$ (der Fluss $f$ wird dann als theoretischer Fluss $f$ bezeichnet, wenn er durch Einsetzen des aktuellen Druckes $w_p$ des flüssigen Mediums in die Flussfunktion berechnet wird) wird von der Recheneinheit ein jeweiliger Einzelverstopfungsgrad *verstopf* ermittelt:

$$verstopf = \frac{f_{act}}{f} - 1$$

Für den Fall, dass das im Leitungssystem von der zumindest einen Leitung geführte flüssige Medium am Ende der zumindest einen Leitung über Düsen vom Leitungssystem beziehungsweise von der zumindest einen Leitung austritt, bedeutet beispielsweise ein Einzelverstopfungsgrad *verstopf* von -0,1 (= -10%), dass das Leitungssystem beziehungsweise die zumindest eine Leitung oder die Düse zu 10% verstopft ist. Ein Einzelverstopfungsgrad *verstopf* von +0,1 (= +10%) bedeutet, dass 10% des im Leitungssystem geführten flüssigen Mediums über eine Leckage aus dem Leitungssystem austreten.

Die Berechnung eines Intervalls, innerhalb dessen ein Verstopfungsgrad $\kappa$ mit einer gewissen, vorher festzulegenden Wahrscheinlichkeit liegt, erfolgt durch die Recheneinheit anhand einer Anzahl von ermittelten Einzelverstopfungsgraden unter Anwendung stochastischer Methoden. Dabei werden laufend und in zyklischen Abständen der theoretische Fluss $f$ (mittels der Flussfunktion) sowie der aktuelle Fluss $f_{act}$ im Leitungssystem beziehungsweise in der zumindest einen Leitung als Datenstrom ermittelt beziehungsweise gemessen. Sowohl der theoretische Fluss $f$ als auch der aktuelle Fluss $f_{act}$ werden als Zufallsvariablen betrachtet. Mittels der stochastischen Methoden wird mit einer bestimmten Irrtumswahrscheinlichkeit bestimmt, für welche Werte $\kappa$ ($\kappa$ modelliert den Verstopfungsgrad) die Datenströme $\kappa \cdot f$ und $f_{act}$ nicht vom gleichen Zufallsprozess erzeugt werden können. Die Wahrscheinlichkeit, dass das Leitungssystem beziehungsweise die zumindest eine Leitung einen Verstopfungsgrad $\kappa$ aufweist, der im berechneten Intervall liegt, beträgt 1 minus der Irrtumswahrscheinlichkeit.

Das Leitungssystem beziehungsweise die zumindest eine Leitung wird durch Heranziehen der Lage dieses Intervalls in Bezug auf vorher festgelegte, zulässige erste Grenzen für den Verstopfungsgrad hinsichtlich des Vorliegens einer Störung des Leitungssystems beziehungsweise der zumindest einen Leitung überwacht. Alternativ oder zusätzlich kann die Größe dieses Intervalls überwacht werden.

Ein wesentlicher Vorteil des erfindungsgemäßen Verfahrens besteht darin, dass auch verrauschte Signale kein Problem darstellen und somit Fehlalarme bei der Überwachung des Leitungssystems beziehungsweise der zumindest einen Leitung vermieden werden. Um derartige Fehlalarme zu vermeiden, werden in aus dem Stand der Technik bekannten Verfahren relativ große Toleranzen vorgegeben, wobei die Toleranzen als Differenz zwischen dem aktuellen Druck des flüssigen Mediums und dem theoretischen Druck des flüssigen Mediums gegeben sind. Beim erfindungsgemäßen Verfahren hingegen sind derartige große Toleranzen überflüssig.

Außerdem gibt die Differenz zwischen dem aktuellen Druck des flüssigen Mediums und dem theoretischen Druck des flüssigen Mediums nur eine tendenzielle Auskunft über das Maß der Verstopfung. Im Gegensatz dazu wird mittels des erfindungsgemäßen Verfahrens ein konkretes Intervall berechnet, innerhalb dessen der Verstopfungsgrad mit einer vorgegebenen Wahrscheinlichkeit liegt.

In einer bevorzugten Ausführungsform des erfindungsgemäßen Verfahrens ist das Leitungssystem als Kühlsystem eines metallurgischen Aggregats, insbesondere als Kühlsystem einer Stranggussanlage für die Herstellung eines metallischen Stranges, oder als Kühlsystem eines Walzwerks für die Herstellung eines Metallbandes ausgebildet, wobei das mittels der zumindest einen Leitung zu einer Düse geführte flüssige Medium mittels der Düse auf den metallischen Strang beziehungsweise auf das Metallband aufgebracht wird.

Das flüssige Medium wird zur Düse geführt. Der in der Stranggussanlage hergestellte metallische Strang beziehungsweise das im Walzwerk hergestellte Metallband wird mittels des flüssigen Mediums, welches aus der Düse austritt, gekühlt. Derartige Kühlsysteme erfordern eine hohe Verfügbarkeit sowie eine hohe Betriebssicherheit und Zuverlässigkeit, da im Falle eines Versagens des Kühlsystems beträchtliche Schäden entstehen können. Wird zur Überwachung des Kühlsystems das erfindungsgemäße Verfahren angewandt, so können Störungen infolge einer Leckage oder einer Verstopfung des Kühlsystems beziehungsweise der Düsen schnell und zuverlässig erkannt werden, ohne dabei unnötige Fehlalarme auszulösen. Weiterhin wird in diesem Fall die Überwachung des Leitungssystems auch während eines Stillstandes der Stranggussanlage beziehungsweise des Walzwerkes durchgeführt. Dies hat den Vorteil, dass das Leitungssystem während Instandhaltungsarbeiten an der Stranggussanlage oder am Walzwerk auf Störungen überprüft werden kann und gegebenenfalls Leckagen oder Verstopfungen des Leitungssystems noch vor Inbetriebahme der Stranggussanlage oder des Walzwerkes behoben werden können.

In einer weiteren bevorzugten Ausführungsform des erfindungsgemäßen Verfahrens ist das flüssige Medium, welches zu der zumindest einen Düse geführt wird, Wasser. Wasser ist ein in ausreichender Menge vorhandenes und billig verfügbares, umweltneutrales Medium, welches beispielsweise effektiv zur Kühlung eingesetzt werden kann.

Vorzugsweise weisen die Erfassungszeitpunkte einen Zeitabstand voneinander auf, der zwischen 2 Sekunden und 5 Sekunden liegt. Der Zeitabstand kann beispielsweise 3 Sekunden betragen. Derartige Zeitabstände stellen ein optimales Verhältnis zwischen anfallender Datenmenge der ermittelten Parameter und Genauigkeit beziehungsweise Zuverlässigkeit des erfindungsgemäßen Verfahrens dar.

Es werden also immer wieder erneut der aktuelle Druck und der aktuelle Fluss gemessen und daraus von der Recheneinheit der jeweilige Einzelverstopfungsgrad ermittelt. Dieser Einzelverstopfungsgrad erweitert die Anzahl an bisher ermittelten Einzelverstopfungsgraden. Weiterhin wird in der Regel ab einer bestimmten Anzahl von Einzelverstopfungsgraden der älteste Einzelverstopfungsgrad nicht mehr zur Berechnung des Intervalls herangezogen. Die bestimmte Anzahl kann - beispielsweise - zwischen 20 und 50 liegen, insbesondere zwischen 30 und 40. Es ist möglich, dass die Anzahl einem das Ermittlungsverfahren automatisiert ausführenden System von einem Bediener des Systems vorgegeben wird.

In einer weiteren Ausführungsform des erfindungsgemäßen Verfahrens umfasst die stochastische Methode einen Einstichproben-t-Test.

Ein t-Test ist ein statistischer Hypothesentest, welcher auf ein Datensample (= eine Anzahl von Stichproben) unter der Voraussetzung einer Normalverteilung angewendet werden kann. Im Rahmen dieser Anmeldung wird vorzugsweise der Einstichproben-t-Test angewandt. Jede einzelne Stichprobe entspricht dem jeweiligen Wertepaar von aktuellem Druck $w_p$ bzw. daraus ermittelten theoretischen Fluss $f$ und aktuellem Fluss $f_{act}$.

Unter der Annahme, dass der aktuelle (gemessene) Fluss $f_{act}$ mit dem Wert $\kappa$ um den theoretischen Fluss $f$ fluktuiert, kann der Einstichproben-t-Test in abgewandelter Form als

$$\frac{\left|E(f_{act}) - \kappa E(f)\right|}{\sqrt{\mathrm{var}(f_{act}) + \kappa^2\,\mathrm{var}(f) - 2\kappa\mathrm{cov}(f_{act}, f)}}\sqrt{n} \le t(1 - \alpha/2, n-1)$$

geschrieben werden. Dabei sind $E(f_{act})$ der Erwartungswert der aktuellen (gemessenen) Flüsse, $E(f)$ der Erwartungswert der theoretischen Flüsse, var die Varianz, cov die Kovarianz, t die t-Verteilung für ein $\alpha$-Quantil (beispielsweise von 0,05) und n Freiheitsgrade und n die Anzahl der Werte (Stichprobenumfang). Erwartungswert, Varianz, Covarianz, t-Verteilung und Quantil sind Begriffe, die auf dem Gebiet der Wahrscheinlichkeitsrechnung eine feste Bedeutung aufweisen.

In obiger Gleichung ist lediglich der Verstopfungsgrad $\kappa$ unbekannt. Alle anderen Größen sind entweder prinzipiell konstant oder durch die vorherige stochastische Auswertung bestimmt. Insbesondere sind die Erwartungswerte ist $E(f_{act})$ und $E(f)$, die Varianzen $\mathrm{var}(f_{act})$ und $\mathrm{var}(f)$ und die Kovarianz $\mathrm{cov}(f_{act,f})$ durch die gemessenen aktuellen Flüsse $f_{act}$ bzw. ermittelten Flüsse $f$ bestimmt. Weiterhin ist die Anzahl n an verwerteten Stichproben bekannt. Die Wahrscheinlichkeit kann vorgegeben werden. Sie bestimmt zusammen mit der Anzahl n an verwerteten Stichproben den Wert t.

Es ist daher möglich, die obige Gleichung in eine quadratische Gleichung umzuformen. Diese Gleichung lautet

$$\left[nE^2(f) - t^2\,\mathrm{var}(f)\right]\cdot\kappa^2 + \left[2t\,\mathrm{cov}(f_{act}, f) - 2nE(f_{act})E(f)\right]\cdot\kappa + \left[nE^2(f_{act}) - t^2\,\mathrm{var}(f_{act})\right] \le 0$$

Die Argumente des Wertes t sind in obiger Gleichung weggelassen worden, um die Gleichung nicht unnötig zu überfrachten.

Die Lösungen $\kappa 1$ und $\kappa 2$ obiger Gleichung können daher ohne weiteres ermittelt werden, wobei (ohne Beschränkung der Allgemeinheit) k1 die kleinere und k2 die größere Lösung ist. Aus *k1* und *k2* werden *verstopf1* und *verstopf2* mittels der Beziehung *verstopf = k-1* berechnet. Das bedeutet, dass der Verstopfungsgrad mit einer Wahrscheinlichkeit von (1 - $\alpha$) innerhalb des Intervalls *[verstopf1;verstopf2]* liegt.

Die festzulegende Wahrscheinlichkeit kann der Recheneinheit von einem Bediener vorgegeben werden. Die festzulegende Wahrscheinlichkeit ist daher frei wählbar. In der Regel wird die Wahrscheinlichkeit auf 90 %, vorzugsweise auf 95 % festgelegt. Bei kritischen Systemen wird die Wahrscheinlichkeit auf 99 % festgelegt.

In einer bevorzugten Ausführungsform des erfindungsgemäßen Verfahrens wird ein Alarm als Hinweis für die Störung des Leitungssystems ausgelöst, wenn das berechnete Intervall für den Verstopfungsgrad außerhalb der festgelegten Grenzen für den Verstopfungsgrad liegt. Sind *verstopf1* und *verstopf2* negativ und kleiner als die festgelegten ersten Grenzen, wird ein Alarm als Hinweis für eine Verstopfung der zumindest einen Leitung ausgelöst. Sind *verstopf1* und *verstopf2* positiv und größer als die festgelegten ersten Grenzen, wird ein Alarm als Hinweis für einen Bruch der zumindest einen Leitung ausgelöst.

Ist die Differenz *verstopf2* minus *verstopf1* größer als eine festgelegte zweite Grenze, so wird ein Alarm ausgelöst, der besagt, dass das Leitungssystem unbestimmbar ist.

Für alle anderen Werte von *verstopf1* und *verstopf2* wird das Leitungssystem als fehlerfrei klassifiziert. Mögliche bereits erkannte Alarme werden gelöscht.

In einer anderen Ausführungsform des erfindungsgemäßen Verfahrens handelt es sich bei dem metallischen Strang um einen Stahlstrang. Unter metallisch sind neben Stahl insbesondere auch Eisen, Kupfer, Aluminium oder eine Mischung daraus zu verstehen. Es kann sich beispielsweise auch um einen Aluminiumstrang handeln.

Das metallische Band ist in einer weiteren Ausführungsform des erfindungsgemäßen Verfahrens ein Stahlflachbandprodukt. Beispielsweise wird das Stahlflachbandprodukt mittels eines Warmwalzprozesses in einer Warmwalzstrasse des Walzwerkes produziert.

Es ist auch denkbar, dass neben dem flüssigen Medium auch ein gasförmiges Medium in einer weiteren Leitung des Leitungssystems geführt wird. Das flüssige Medium und das gasförmige Medium werden dabei, zumindest teilweise, in getrennten Leitungen geführt und im Bereich der Düse zu einem Gemisch gemischt. Das Gemisch wird dann beispielsweise auf den metallischen Strang beziehungsweise auf das Metallband aufgebracht.

Dabei wird, zusätzlich zum flüssigen Medium, das gasförmige Medium bei der Herleitung der Flussfunktion entsprechend berücksichtigt.

Die Aufgabe wird weiterhin durch ein Computerprogramm gelöst, wobei das Computerprogramm Maschinencode umfasst, der von einer Recheneinheit abarbeitbar ist. Die Abarbeitung des Maschinencodes durch die Recheneinheit bewirkt, dass die Recheneinheit ein Verfahren mit den Schritten b) bis e) des erfindungsgemäßen Verfahrens ausführt. Vorzugsweise implementiert die Recheneinheit aufgrund der Abarbeitung des Maschinencodes auch vorteilhafte Ausgestaltungen des erfindungsgemäßen Verfahrens.

Die Aufgabe wird weiterhin durch ein computerlesbares Speichermedium gelöst, auf dem ein erfindungsgemäßes Computer-programm gespeichert ist.

Die Aufgabe wird weiterhin durch eine Recheneinheit gelöst, wobei die Recheneinheit mit einem erfindungsgemäßen Computerprogramm programmiert ist.

Die Aufgabe wird weiterhin durch eine Vorrichtung gelöst,

a) wobei die Vorrichtung ein Leitungssystem mit zumindest einer Leitung umfasst, wobei in der mindestens einen Leitung ein flüssiges Medium führbar ist,

b) wobei die Vorrichtung zumindest jeweils eine Einrichtung zur Ermittlung von aktuellem Druck des flüssigen Mediums in der zumindest einen Leitung und aktuellem Fluss des flüssigen Mediums in der zumindest einen Leitung umfasst,

c) wobei die Vorrichtung eine mit den Einrichtungen gekoppelte erfindungsgemäße Recheneinheit umfasst.

Vorzugsweise umfasst die Vorrichtung weiterhin eine Überwachungseinheit zur Überwachung des Leitungssystems durch Heranziehen der Größe des berechneten Intervalls und/oder der Lage des berechneten Intervalls in Bezug auf vorher festgelegte erste Grenzen für den Verstopfungsgrad als Hinweis für das Vorliegen einer Störung des Leitungssystems. Die Überwachungseinrichtung kann Bestandteil der Recheneinheit sein.

Eine besonders bevorzugte Ausführungsform der erfindungsgemäßen Vorrichtung umfasst weiterhin ein metallurgisches Aggregat, insbesondere eine Stranggussanlage zur Herstellung eines metallischen Stranges, oder ein Walzwerk zur Herstellung eines Metallbandes, ausgestattet mit dem Leitungssystem als Kühlsystem, und zumindest eine Düse, in welche die zumindest eine Leitung des Leitungssystems mündet und mittels der das flüssige Medium auf den metallischen Strang beziehungsweise auf das Metallband aufbringbar ist.

In einer bevorzugten Ausführungsform der erfindungsgemäßen Vorrichtung umfasst die Vorrichtung eine Alarmeinrichtung zur Auslösung eines Alarms als Hinweis für die Störung des Leitungssystems, welche mit der Recheneinheit gekoppelt ist.

Die Alarmeinrichtung ist mit der Recheneinheit gekoppelt. Wird eine Störung des Leitungssystems erkannt, so erfolgt mittels der Alarmeinrichtung eine Benachrichtigung an eine Empfangseinrichtung, insbesondere an eine akustische und/oder an eine optische Signaleinrichtung. Die Empfangseinrichtung kann beispielsweise auch als Mobiltelefon, Tablet-PC oder als Computer ausgeführt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    ein erfindungsgemäßes Verfahren und eine erfindungsgemäße Vorrichtung zur Überwachung eines Leitungssystems und

FIG 2    einen Zusammenhang zwischen aktuellem Fluss und aktuellem Druck eines flüssigen Mediums eines Leitungssystems und einen Datenfit.

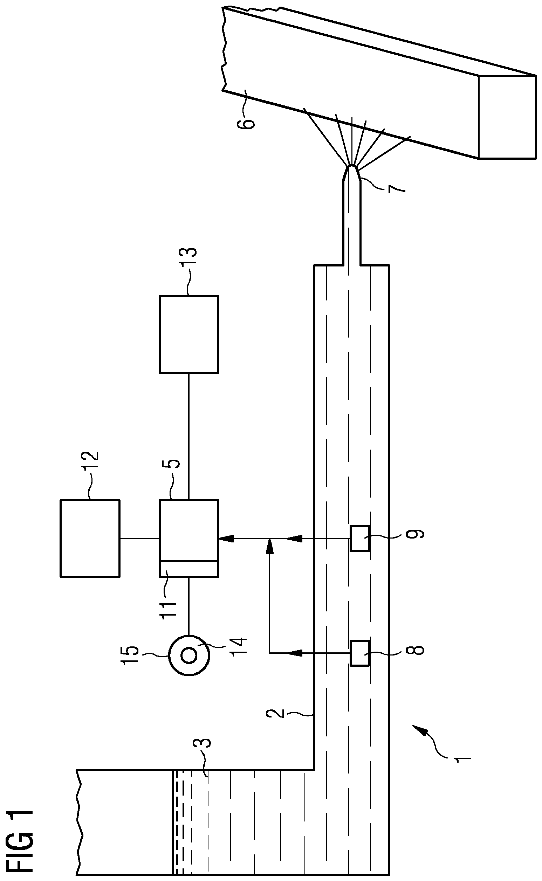

Gemäß FIG 1 wird in einer Leitung 2 des Leitungssystems 1 ein flüssiges Medium 3 geführt, wobei das flüssige Medium Wasser ist.

In einem ersten Schritt werden mittels einer Einrichtung 8 zur Ermittlung eines aktuellen Drucks des flüssigen Mediums 3 in der Leitung 2 und mittels einer Einrichtung 9 zur Ermittlung des aktuellen Flusses des flüssigen Mediums 3 in der Leitung 2 der aktuelle Druck des flüssigen Mediums 3 und der aktuelle Fluss des flüssigen Mediums 3 in der Leitung 2 als Parameter ermittelt.

In einem zweiten Schritt werden die erfassten Werte an eine mit den Einrichtungen 8, 9 gekoppelte Recheneinheit 5 übergeben. Diese nimmt die erfassten Werte entgegen. Mittels der Recheneinheit 5 wird in einem dritten Schritt anhand des erfassten Druckes unter Berücksichtigung einer vorgegebenen Flussfunktion ein theoretischer Fluss des flüssigen Mediums 3 in der zumindest einen Leitung 2 berechnet. Die Flussfunktion beschreibt einen physikalischen Zusammenhang zwischen dem theoretischen Fluss des flüssigen Mediums 3 und dem aktuellen Druck des flüssigen Mediums 3. Weiterhin wird in einem vierten Schritt anhand des theoretischen Flusses und des aktuellen Flusses ein Einzelverstopfungsgrad ermittelt. Hierbei wird insbesondere der Quotient zwischen dem aktuellen und dem theoretischen Fluss ermittelt.

Sodann wird mittels der Recheneinheit 5 in einem fünften Schritt anhand einer Anzahl von ermittelten Einzelverstopfungsgraden unter Anwendung stochastischer Methoden ein Intervall berechnet, innerhalb dessen ein Verstopfungsgrad des Leitungssystems mit einer festzulegenden Wahrscheinlichkeit liegt. Die stochastischen Methoden können insbesondere einen Einstichproben-t-Test umfassen. Die festzulegende Wahrscheinlichkeit kann der Recheneinheit 5 von einem Bediener vorgegeben werden. Die Wahrscheinlichkeit ist frei wählbar. In der Regel wird die Wahrscheinlichkeit auf mindestens 90 % festgelegt, vorzugsweise auf mindestens 95 %.

In einem sechsten und letzten Schritt wird das Leitungssystem 1 durch Heranziehen der Lage des berechneten Intervalls in Bezug auf vorher festgelegte erste Grenzen für den Verstopfungsgrad überwacht. Die Lage des berechneten Intervalls dient als Hinweis für das Vorliegen einer Störung des Leitungssystems 1. Gleiches gilt für die Größe des berechneten Intervalls.

Die Schritte 1 bis 6 werden in zyklischen Zeitabständen durchgeführt, wobei die Zeitabstände zwischen 2 Sekunden und 5 Sekunden betragen, bevorzugt 3 Sekunden.

Wenn das berechnete Intervall für den Verstopfungsgrad außerhalb der festgelegten ersten Grenzen für den Verstopfungsgrad liegt, wird mittels einer mit der Recheneinheit 5 gekoppelten Alarmeinrichtung 13 ein Alarm als Hinweis für die Störung des Leitungssystems 1 ausgelöst.

In FIG 1 ist das Leitungssystem 1 als Kühlsystem einer Stranggussanlage für die Herstellung eines metallischen Stranges 6 ausgebildet. Dabei wird das mittels der Leitung 2 zu einer Düse 7 geführte flüssige Medium 3 mittels der Düse 7 auf den metallischen Strang 6 aufgebracht, insbesondere auf einen Stahlstrang. Die Überwachung des Leitungssystems 1 wird auch während eines Stillstandes der Stranggussanlage durchgeführt.

Die Wirkungsweise der Recheneinheit 5 wird durch ein Computerprogramm 14 bestimmt, welches in der Recheneinheit 5 abläuft. Das Computerprogramm 14 befindet sich auf einem computerlesbaren Speichermedium 15.

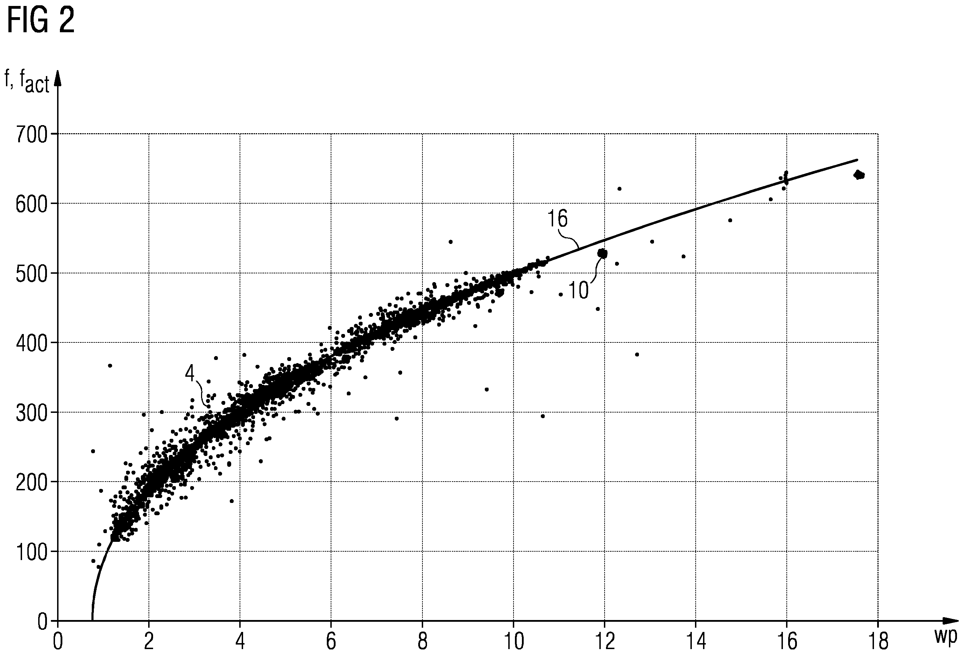

FIG 2 zeigt einen Zusammenhang zwischen aktuellem Fluss $f_{act}$ und aktuellem Druck $w_p$ des flüssigen Mediums 3 des Leitungssystems 1 und einen Datenfit 16. Auf der Abszisse ist der aktuelle Druck $w_p$ des flüssigen Mediums 3 aufgetragen, konkret der Wasserdruck.

Auf der Ordinate sind, in Abhängigkeit vom aktuellen Druck $w_p$, dargestellt:

- der aktuelle Fluss $f_{act}$ des flüssigen Mediums 3, konkret der aktuelle Wasserfluss, welcher in der Leitung 2 des tatsächlichen Leitungssystems 1 ermittelt wurde - dargestellt durch kleine Punkte 4,
- der aktuelle Fluss $f_{act}$ des flüssigen Mediums 3, konkret der aktuelle Wasserfluss, welcher in der Leitung 2 des Leitungssystems 1 einer Testanordnung, in welchem die physikalischen Verhältnisse des tatsächlichen Leitungssystems 1 beziehungsweise der zumindest einen Leitung 2 wiedergegeben werden, ermittelt wurde - dargestellt durch große Punkte 10 und
- der theoretische Fluss $f$ des flüssigen Mediums 3, konkret der theoretische Wasserfluss, welcher in FIG 2 als Datenfit 16 der Werte für den aktuellen Fluss $f_{act}$ des flüssigen Mediums 3 in der Leitung 2 des tatsächlichen Leitungssystems 1 ermittelt wurde. Der Datenfit 16 könnte in der gleichen Weise auch aus der Testanordnung ermittelt werden. Der theoretische Fluss $f$ stellt die Flussfunktion dar, also den Zusammenhang zwischen dem aktuellen Druck $w_p$ des flüssigen Mediums 3 und dem aktuellen Fluss $f_{act}$ des flüssigen Mediums 3. Die Flussfunktion wird in der Recheneinheit 5 hinterlegt.

Die vorliegende Erfindung weist viele Vorteile auf. Insbesondere kann der Verstopfungsgrad hochgenau und auf zuverlässige Weise ermittelt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| 1 | Leitungssystem |
| 2 | Leitung |
| 3 | flüssiges Medium |
| 4 | kleine Punkte |
| 5 | Recheneinheit |
| 6 | metallischer Strang |
| 7 | Düse |
| 8 | Einrichtung zur Ermittlung von aktuellem Druck des flüssigen Mediums |
| 9 | Einrichtung zur Ermittlung von aktuellem Fluss des flüssigen Mediums |
| 10 | große Punkte |
| 11 | Flussfunktion |
| 12 | Überwachungseinheit |
| 13 | Alarmeinrichtung |
| 14 | Computerprogramm |
| 15 | computerlesbares Speichermedium |
| 16 | Datenfit |

**Patentansprüche**

1. Verfahren zur Überwachung eines Leitungssystems (1), wobei in zumindest einer Leitung (2) des Leitungssystems (1) ein flüssiges Medium (3) geführt wird,

   a) wobei zu Erfassungszeitpunkten jeweils der aktuelle Druck des flüssigen Mediums (3) in der zumindest einen Leitung (2) und der jeweils zugehörige aktuelle Fluss in der zumindest einen Leitung (2) erfasst werden,
   b) wobei der jeweils erfasste aktuelle Druck und der jeweils erfasste aktuelle Fluss von einer Recheneinheit (5) entgegengenommen werden,
   c) wobei von der Recheneiheit (5) aus dem jeweiligen erfassten aktuellen Druck unter Berücksichtigung einer vorgegebenen Flussfunktion, welche einen physikalischen Zusammenhang zwischen dem theoretischen Fluss des flüssigen Mediums (3) und dem jeweiligen aktuellen Druck des flüssigen Mediums (3) beschreibt, ein jeweiliger theoretischer Fluss des flüssigen Mediums (3) in der zumindest einen Leitung (2) berechnet wird,
   d) wobei von der Recheneinheit (5) anhand des jeweiligen aktuellen und des jeweiligen theoretischen Flusses ein jeweiliger Einzelverstopfungsgrad ermittelt wird,
   e) wobei von der Recheneinheit (5) anhand einer Anzahl von ermittelten Einzelverstopfungsgraden unter Anwendung stochastischer Methoden ein Intervall berechnet wird, innerhalb dessen ein Verstopfungsgrad des Leitungssystems (1) mit einer festzulegenden Wahrscheinlichkeit liegt, und
   f) wobei das Leitungssystem (1) durch Heranziehen der Größe des berechneten Intervalls und/oder der Lage des berechneten Intervalls in Bezug auf vorher festgelegte erste Grenzen für den Verstopfungsgrad als Hinweis für das Vorliegen einer Störung des Leitungssystems (1) überwacht wird.

2. Verfahren nach Anspruch 1,
   **dadurch gekennzeichnet,**
   **dass** das Leitungssystem (1) als Kühlsystem eines metallurgischen Aggregats, insbesondere als Kühlsystem einer Stranggussanlage für die Herstellung eines metallischen Stranges (6), oder als Kühlsystem eines Walzwerks für die Herstellung eines Metallbandes ausgebildet ist, dass das mittels der zumindest einen Leitung (2) zu einer Düse (7) geführte flüssige Medium (3) mittels der Düse (7) auf den metallischen Strang (6) beziehungsweise auf das Metallband aufgebracht wird und dass die Überwachung des Leitungssystems (1) auch während eines Stillstandes der Stranggussanlage beziehungsweise des Walzwerkes durchgeführt wird.

3. Verfahren nach Anspruch 2,
   **dadurch gekenntzeichnet,**

dass das flüssige Medium (3), welches zu der Düse (7) geführt wird, Wasser ist.

4. Verfahren nach Anspruch 1, 2 oder 3,
   **dadurch gekennzeichnet,**
   **dass** die Erfassungszeitpunkte einen einheitlichen Zeitabstand voneinander aufweisen, der zwischen 2 Sekunden und 5 Sekunden liegt.

5. Verfahren nach einem der obigen Ansprüche,
   **dadurch gekennzeichnet,**
   **dass** die stochastischen Methoden einen Einstichproben-t-Test umfassen.

6. Verfahren nach einem der obigen Ansprüche,
   **dadurch gekennzeichnet,**
   **dass** die festzulegende Wahrscheinlichkeit der Recheneinheit (5) von einem Bediener vorgegeben wird.

7. Verfahren nach einem der obigen Ansprüche,
   **dadurch gekenntzeichnet,**
   dass von der Recheneinheit (5) ein Hinweis auf eine Störung des Leitungssystems (1) ausgelöst wird, wenn das berechnete Intervall für den Verstopfungsgrad vollständig außerhalb der festgelegten Grenzen für den Verstopfungsgrad liegt.

8. Verfahren nach einem der obigen Ansprüche,
   **dadurch gekennzeichnet,**
   **dass** von der Recheneinheit (5) ein Alarm ausgelöst wird, dass das Leitungssystem (1) unbestimmbar ist, wenn das berechnete Intervall größer als eine vorbestimmte zweite Grenze ist.

9. Computerprogramm, das Maschinencode umfasst, der von einer Recheneinheit (5) abarbeitbar ist, wobei die Abarbeitung des Maschinencodes durch die Recheneinheit (5) bewirkt, dass die Recheneinheit (5) ein Verfahren mit den Schritten b) bis e) von Anspruch 1 ausführt.

10. Computerprogramm nach Anspruch 9,
    **dadurch gekennzeichnet,**
    **dass** die Recheneinheit (5) aufgrund der Abarbeitung des Maschinencodes den Schritt f) von Anspruch 1 ausführt und/oder die Merkmale mindestens eines der Ansprüche 4 bis 8 implementiert.

11. Computerlesbares Speichermedium, auf dem ein Computerprogramm (14) nach Anspruch 9 oder 10 gespeichert ist.

12. Recheneinheit, wobei die Recheneinheit mit einem Computerprogramm (14) nach Anspruch 9 oder 10 programmiert ist.

13. Vorrichtung,

    a) wobei die Vorrichtung ein Leitungssystem (1) mit zumindest einer Leitung (2) umfasst, in der ein flüssiges Medium (3) führbar ist,
    b) wobei die Vorrichtung zumindest jeweils eine Einrichtung (8, 9) zur Ermittlung von aktuellem Druck des flüssigen Mediums (3) in der zumindest einen Leitung (2) und aktuellem Fluss des flüssigen Mediums (3) in der zumindest einen Leitung (2) umfasst,
    c) wobei die Vorrichtung eine mit den Einrichtungen (8, 9) gekoppelte Recheneinheit (5) nach Anspruch 12 umfasst.

14. Vorrichtung nach Anspruch 13,
    **dadurch gekennzeichnet,**
    **dass** die Vorrichtung eine Überwachungseinheit (12) zur Überwachung des Leitungssystems (1) durch Heranziehen der Größe des berechneten Intervalls und/oder der Lage des berechneten Intervalls in Bezug auf vorher festgelegte erste Grenzen für den Verstopfungsgrad als Hinweis für das Vorliegen einer Störung des Leitungssystems (1) umfasst.

**Claims**

1. Method for monitoring a line system (1), wherein a liquid medium (3) is guided in at least one line (2) of the line system (1),

   a) wherein in each case the current pressure of the liquid medium (3) in the at least one line (2) and in each case the associated current flow in the at least one line (2) are sensed at sensing times,
   b) wherein in each case the sensed current pressure and in each case the sensed current flow are received by a computing unit (5),
   c) wherein the computing unit (5) calculates a respective theoretical flow of the liquid medium (3) in the at least one line (2) from the respective sensed current pressure taking into account a prespecified flow function describing a physical relationship between the theoretical flow of the liquid medium (3) and the respective current pressure of the liquid medium (3),
   d) wherein the computing unit (5) determines a respective individual degree of clogging on the basis of the respective current and the respective theoretical flow,
   e) wherein the computing unit (5) calculates an interval within which a degree of clogging of the line system (1) lies with a probability to be defined on the basis of a number of determined individual degrees of clogging using stochastic methods and
   f) wherein the line system (1) is monitored by using the size of the calculated interval and/or the position of the calculated interval with respect to first limits for the degree of clogging that are defined beforehand as an indication of the presence of a fault in the line system (1).

2. Method according to claim 1,
   **characterised in that**
   the line system (1) is embodied as a cooling system in a metallurgical unit, in particular as a cooling system in a continuous casting plant for the production of a metallic strand (6), or as a cooling system in a rolling mill for the production of a metal strip, that the liquid medium (3) guided by means of the at least one line (2) to a nozzle (7) is applied by means of the nozzle (7) to the metallic strand (6) or to the metal strip and that the monitoring of the line system (1) is also performed during a standstill of the continuous casting plant or of the rolling mill.

3. Method according to claim 2,
   **characterised in that**
   the liquid medium (3) guided to the nozzle (7) is water.

4. Method according to claim 1, 2 or 3,
   **characterised in that**
   the sensing times have a uniform time interval between one another lying between 2 seconds and 5 seconds.

5. Method according to one of the preceding claims,
   **characterised in that**
   the stochastic methods include a one-sample t-test.

6. Method according to one of the preceding claims,
   **characterised in that**
   the probability to be defined is specified to the computing unit (5) by an operator.

7. Method according to one of the preceding claims,
   **characterised in that**
   the computing unit (5) issues an indication of a fault in the line system (1) when the calculated interval for the degree of clogging lies completely outside the defined limits for the degree of clogging.

8. Method according to one of the preceding claims,
   **characterised in that**
   the computing unit (5) issues an alarm indicating that the line system (1) is indeterminable when the calculated interval is greater than a predetermined second limit.

9. Computer program comprising a machine code that can be executed by a computing unit (5), wherein the execution of the machine code by the computing unit (5) causes the computing unit (5) to carry out a method with steps b) to e) in claim 1.

10. Computer program according to claim 9,
**characterised in that**
as a result of the execution of the machine code, the computing unit (5) carries out step f) in claim 1 and/or implements the features of at least one of claims 4 to 8.

11. Computer-readable storage medium on which a computer program (14) according to claim 9 or 10 is stored.

12. Computing unit, wherein the computing unit is programmed with a computer program (14) according to claim 9 or 10.

13. Device,

    a) wherein the device comprises a line system (1) having at least one line (2) in which a liquid medium (3) can be guided,
    b) wherein the device in each case comprises at least one apparatus (8, 9) for determining the current pressure of the liquid medium (3) in the at least one line (2) and the current flow of the liquid medium (3) in the at least one line (2),
    c) wherein the device comprises a computing unit (5) coupled to the apparatuses (8, 9) according to claim 12.

14. Device according to claim 13,
**characterised in that**
the device comprises a monitoring unit (12) for monitoring the line system (1) by using the size of the calculated interval and/or the position of the calculated interval with respect to first limits for the degree of clogging that are defined beforehand as an indication of the presence of a fault in the line system (1).


## Revendications

1. Procédé destiné à la surveillance d'un système de conduites (1), dans lequel dans au moins une conduite (2) du système de conduites (1) un milieu liquide (3) est guidé,

    (a) dans lequel à des instants de détection respectivement la pression effective du milieu liquide (3) dans l'au moins une conduite (2) et le flux effectif correspondant respectivement dans l'au moins une conduite (2) sont détectés,
    (b) dans lequel la pression effective détectée respectivement et le flux effectif détecté respectivement sont pris par une unité de calcul (5),
    (c) dans lequel un flux théorique respectif du milieu liquide (3) dans l'au moins une conduite (2) est calculé par l'unité de calcul (5) à partir de la pression effective détectée respective en prenant en compte une fonction de flux prédéfinie, laquelle décrit un contexte physique entre le flux théorique du milieu liquide (3) et la pression effective respective du milieu liquide (3),
    (d) dans lequel un degré d'engorgement individuel respectif est déterminé par l'unité de calcul (5) à l'aide de la pression effective respective et du flux théorique respectif,
    (e) dans lequel un intervalle est calculé par l'unité de calcul (5) à l'aide d'une pluralité de degrés d'engorgement individuels déterminés en utilisant des méthodes stochastiques, intervalle dans lequel se trouve un degré d'engorgement du système de conduites (1) avec une probabilité à établir, et
    (f) dans lequel le système de conduites (1) est surveillé en utilisant la grandeur de l'intervalle calculé et/ou la position de l'intervalle calculé par rapport à des premières limites établies préalablement pour le degré d'engorgement en tant qu'indication de la présence d'une perturbation du système de conduites (1).

2. Procédé selon la revendication 1,
**caractérisé en ce que**
le système de conduites (1) est configuré en tant que système de refroidissement d'un agrégat métallurgique, en particulier en tant que système d'une installation de coulée continue pour la fabrication d'une barre métallique (6), ou en tant que système de refroidissement d'un laminoir pour la production d'un ruban métallique, **en ce que** le milieu liquide (3) guidé au moyen de l'au moins une conduite (2) vers une buse (7) est appliqué au moyen de la buse (7) sur la barre métallique (6) ou sur le ruban métallique et **en ce que** la surveillance du système de conduites (1) est réalisée également pendant un arrêt de l'installation de coulée continue ou du laminoir.

3.  Procédé selon la revendication 2,
    **caractérisé en ce que**
    le milieu liquide (3), qui est guidé jusqu'à la buse (7), est l'eau.

4.  Procédé selon la revendication 1, 2 ou 3,
    **caractérisé en ce que**
    les instants de détection présentent les uns par rapport aux autres un intervalle de temps homogène qui se situe entre 2 secondes et 5 secondes.

5.  Procédé selon l'une des revendications précédentes,
    **caractérisé en ce que**
    les méthodes stochastiques comprennent un test t unilatéral.

6.  Procédé selon l'une des revendications précédentes,
    **caractérisé en ce que**
    la probabilité à établir de l'unité de calcul (5) est prédéfinie par un opérateur.

7.  Procédé selon l'une des revendications précédentes,
    **caractérisé en ce qu'**
    une indication d'une perturbation du système de conduites (1) est déclenchée par l'unité de calcul (5) lorsque l'intervalle calculé pour le degré d'engorgement se situe entièrement en dehors de limites établies pour le degré d'engorgement.

8.  Procédé selon l'une des revendications précédentes,
    **caractérisé en ce qu'**
    une alerte est déclenchée par l'unité de calcul (5), alerte selon laquelle le système de conduites (1) est indéterminé lorsque l'intervalle calculé est plus grand qu'une deuxième limite prédéterminée.

9.  Programme informatique, qui comprend un code machine qui peut être pris en charge par une unité de calcul (5), dans lequel la prise en charge du code machine par le biais de l'unité de calcul (5) a pour conséquence que l'unité de calcul (5) exécute un procédé avec les étapes b) à e) de la revendication 1.

10. Programme informatique selon la revendication 9,
    **caractérisé en ce que**
    l'unité de calcul (5) exécute l'étape f) de la revendication 1 en raison de la prise en charge du code machine et/ou met en oeuvre les caractéristiques d'au moins l'une des revendications 4 à 8.

11. Support lisible par un ordinateur, sur lequel un programme informatique (14) selon la revendication 9 ou 10 est mis en mémoire.

12. Unité de calcul, dans laquelle l'unité de calcul est programmée avec un programme informatique (14) selon la revendication 9 ou 10.

13. Dispositif,

    a) dans lequel le dispositif comprend un système de conduites (1) avec au moins une conduite (2), dans laquelle un milieu liquide (3) peut être guidé,
    b) dans lequel le dispositif comprend respectivement un équipement (8, 9) en vue de la détermination de la pression effective du milieu liquide (3) dans l'au moins une conduite (2) et du flux effectif du milieu liquide (3) dans l'au moins une conduite (2),
    c) dans lequel le dispositif comprend une unité de calcul (5) selon la revendication 12 couplée aux équipements (8, 9).

14. Dispositif selon la revendication 13,
    **caractérisé en ce que**
    le dispositif comprend une unité de surveillance (12) destinée à la surveillance du système de conduites (1) en utilisant la grandeur de l'intervalle calculé et/ou la position de l'intervalle calculé par rapport à des premières limites établies préalablement pour le degré d'engorgement en tant qu'indication de la présence d'une perturbation du système de conduites (1).

FIG 1

FIG 2

EP 3 102 351 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009051931 A1
- AT 513042 B1
- JP H01149109 A